# EUROPEAN PATENT SPECIFICATION

(11) **EP 2 104 435 B1**
(45) Date of publication and mention of the grant of the patent: **09.03.2011**
(21) Application number: 07857291.4
(22) Date of filing: 07.12.2007
(51) Int. Cl.: A23L 1/00, A23L 1/40, A23P 1/02

(54) **PARTICULATE COMPOSITION FOR PREPARING BOUILLON, SOUPS, SAUCES, GRAVIES OR FOR USE AS A SEASONING**
TEILCHENFÖRMIGE ZUSAMMENSETZUNG FÜR DIE HERSTELLUNG VON BRÜHE, SUPPEN, SOSSEN, BRATENSAFT ODER ALS WÜRZE
COMPOSITION PARTICULAIRE DE PRÉPARATION DE BOUILLON, DE SOUPES, DE SAUCES OU DE JUS, OU À UTILISER POUR UN ASSAISONNEMENT

(30) Priority: 17.01.2007 EP 07100662
(43) Date of publication of application: 30.09.2009
(73) Proprietor: Unilever N.V., 3013 AL Rotterdam (NL); Unilever PLC, London EC4Y 0DY (GB)
(72) Inventor: KOHLUS, Reinhard, 74074 Heilbronn (DE)
(74) Representative: Wurfbain, Gilles L.
(86) International application number: PCT/EP2007/063516
(87) International publication number: WO 2008/086918

(56) References cited:
- EP-A- 1 074 188
- WO-A-2004/017762
- WO-A-2004/049827
- WO-A-2006/045404

## Description

The present invention relates to a particulate bouillon or seasoning concentrate, and a process for preparing it.

### Background of the invention

Instant bouillon is commonly used as a base for e.g. bouillon or soups. However, an additional important function is the use as a seasoning product, in this way contributing taste and aroma to a dish during or after its preparation. Bouillon concentrates may have several forms, such as e.g. bouillon cubes, but also granules and powder. The advantage of bouillon cubes is, in particular when applied as a base for bouillon, that a predetermined volume of bouillon concentrate can be added to a specific amount of fluid. For use as a seasoning aid, the consumer appreciates a form of the bouillon concentrate that is easier to sprinkle on a dish. In this respect, powder and granules may be more suitable. They share the advantage that they are easier to dispense on a dish than a cube, and dissolve quickly upon addition to it. Powdered bouillon concentrate, however, may show a limited flowability, e.g. due to its physical state, a problem which may increase over time. This may be a problem both during storage and during the production process. When dispensed during cooking, when added to a steaming dish, a powder may clot together or stick to the packaging material. These effects negatively affect the appeal to the consumer, rendering granulated bouillon concentrate the preference of choice for many purposes.

EP 0594152 A describes a process for granulating food among which seasonings and spices, wherein no water is added and no adjustment of the particle size is necessary. The process comprises mixing with oil and fat under heating (80-120°C) and having open tube melting points, then granulating the mixture through extrusion and then rapidly cooling the mixture. This results in granules with a particle size of from 0.3-3 mm.

EP0884956 A describes a process for the reduction of a free flowing and instantly dispersible and/or soluble granular food product comprising the steps of preparing an oil or fats and powdery carbohydrates and/or protein rich materials in an extruder, plasticizing the mix in the extruder and forming the mix into granules by extruding the plasticized mix in strands and cutting the strands. The granules have a size of 2-5 mm in length and 1-3 mm in diameter.

EP 0787437 A describes a process for the production of a free flowing and instantly dispersible and/or soluble granular food product, comprising mixing powdery carbohydrates and/or protein rich materials, with an oil or fat, further mixing the mixture thus obtained with further powdery carbohydrates and/or protein rich materials in order to obtain a powdery and/or doughlike mix, forming the mix into granules by moistening and particle contacting, and drying the granules.

US 4060645 describes a dehydrated food product in the form of grains which dissolve instantly in water and which have a porous discontinuous structure, a smooth surface and an apparent density of from 30 to 600 g/l. The product is prepared by extruding a thermoplastic starting material in powder or paste form into a chamber where a sub atmospheric pressure prevails and cutting the extruded product into fragments. The size of the granules is from 2.5-15 mm. The minimum dimension is 1-1.5 mm, i.e. retained by a 1mm mesh screen.

US 5332585 describes a granular food product and a process to prepare it comprising mixing molten fat with an amylaceous material, extruding the mixture in strands, cooling the strands and the subdividing them into sections and projecting the sections through a grill to size reduce the sections into granules. The dimension of the granules is 1-5 mm in diameter and 2-10 mm long with a density of ca 400-600 g/l.

EP 0780058 A describes a process to produce a fat containing food product. First a paste is provided by mixing fat and salt. The paste is the milled to reduce the size of the crystals and to coat the crystals with fat. Milling is continued until a flowable powder forms, that optionally may be pressed into tablets.

EP 1712138 A describes a process to provide bouillon particles with a better flowability. A mixture is subjected to microwave treatment, causing melting of the fat fraction, followed by mechanical treatment such as agglomeration to form particles with a narrow granulometry range and a dimension of from about 0.5-5 mm.

A problem observed in the art is that the conventional seasoning granules do not flow well, thus leading to uneven dosing. Accordingly, a need exists for a seasoning concentrate, which is easier to dispense from the packaging than granules of the state of the art and which can be used in an amount comparable to that of a conventional bouillon concentrate to reach a comparable effect. A further aim is to provide a process to produce these particles.

### Summary of the invention

This aim is, at least partly, met by a process to produce a concentrate in the form of particles for preparing bouillon, soups, sauces, gravies or for use as a seasoning comprising at least the following steps:
a. Preparing a mixture comprising at least two of the following components
   - salt
   - monosodium glutamate
   - sugar
   - starch
   - fat
b. preparing particles from said mixture, at least 80% wt. of the particles having a dimension of coarser than 2 mm as determined by sieve analysis,
c. grinding said particles to give particles with a particle dimension between 200 µm and 2 mm as determined by sieve analysis, preferably between 250 µm and 2 mm,
d. optionally removing particles below a dimension of from 200 µm as determined by sieve analysis,
wherein step (b) is effected by one of the processes comprising granulation, agglomeration, extrusion or a combination thereof.

### Detailed description of the invention

The concentrate described above shall be referred to as 'bouillon or seasoning concentrate' in this application. According to the invention, in a first step (a) a mixture of at least two of the ingredients salt, monosodium glutamate, sugar, starch or fat is prepared. However, preferably, the mixture comprises at least three, more preferably, at least four of these ingredients. The salt is preferably NaCl. As starch, flour may be used. Fat may be triglycerides from e.g. animal fat, such as pork fat, chicken fat or beef fat, or vegetable fat and may comprise either solid fat or oil. In addition, several spices and flavours may be present in the mixture, depending on the taste that is aimed at, and they may comprise e.g. garlic, wine, herbs vegetable concentrates or extracts or meat concentrates or extracts or yeast extracts.

According to the invention, the mixture of ingredients resulting from step (a) is formed to a mass of particles in a following step (b). This step (b) is effected by one of the processes comprising granulation, agglomeration, extrusion or a combination thereof. Granulation, being the most preferred process, may be carried out by e.g. a basket extruder or any suitable granulator used in food industry, such as a granulator of e.g. Alexanderwerk AG, Germany. Agglomeration may be carried out in a fluid bed agglomerator. Extrusion may preferably be carried out by twin-screw extrusion, which may be especially advantageous for encapsulated products. It may be advantageous for some of these processes that an additional step is added to the process according to the invention, before such can be ground, wherein the material is cut or broken to a size that is easily to be processed in the next step (c). According to the invention, the size of the particles at this stage of the process is such that at least 80% wt. of the particles having a dimension of coarser than 2 mm as determined by sieve analysis. In this specification, percentages are meant to be percentages by weight, unless otherwise indicated.

According to the invention, in a further step (c), the granules are ground. To enable grinding, the particles of the invention have a rather hard structure. To this end, the amount of moisture should not be too high. A moisture content of lower than 15% is considered suitable in this respect.

In a preferred aspect of the invention, the granules of the present invention have a regular appearance and particle size. This can be achieved by grinding the particles to a particle size between 200 µm and 2mm as determined by sieve analysis. 'Regular appearance' is intended to mean here a form wherein length, width and height of the particles resulting from step (c) do not deviate too much from each other. In a preferred aspect of the invention, the particles according to the invention show an aspect ratio of between 1:1:1 and 1:2:2 (l:w:h). (Substantially) spheroidal particles are preferred.

In order to end up with a fraction of particles with a well defined dimension, it is preferred to separate the ground particles from possible grinding residues. Therefore, an optional removing step (d) is provided. The optional removing step can preferably be conducted with a sieve with a mesh size of 200 µm. Particles smaller than 200 µm can be removed in this way.

When a narrower range of particle dimensions is preferred, the grinding step and optional sieving step may be adjusted accordingly, using a grinder resulting in smaller particles, and a sieve with a smaller mesh.

The particles resulting from step (c) or optional step (d) may be dispensed to a consumer packaging. Dispensing may be carried out by a conventional dispensing apparatus as used in the food industry. It may be conceived that particles resulting from the process of the invention may result in a fill weight of the packaging which is more constant and has less deviation, resulting in a more efficient filing process. In this way, the amount of overfill, required to guarantee a specific minimum amount of particles in the packaging may become smaller. Therefore, the invention further relates to a process, further comprising the step of dispensing the particles resulting from step (c) or (d) into a packaging. Preferably, the packaging is a consumer packaging.

Preferably, in the mixture as mentioned in step (a) of the present invention the at least two components are present in the respective amounts of
- 30-70% wt. salt
- 10-45% wt. monosodium glutamate
- 5-20% wt. sugar
- 2-15% wt. starch
- 7-15% wt. fat.

The composition may additionally comprise 5-30% wt. spices, flavours, and/or colorants etc.

In a further aspect, the invention relates to a concentrate in the form of particles for preparing bouillon, soups, sauces, gravies or for use as a seasoning, comprising at least two of the following components
- salt
- monosodium glutamate
- sugar
- starch
- fat,
at least 80% by weight of the particles having a particle dimension between 200 µm and 2 mm as determined by sieve analysis, a density between 0.8 and 2 g/ml, and an aspect ratio of between 1:1:1 and 1:2:2. (Substantially) spheroidal particles are preferred. However, preferably, the mixture comprises at least three, even more preferably, at least four of the above mentioned components.

According to the invention particles are used with a density that is not too low: for seasoning purposes it is appreciated by the consumer that the bouillon or seasoning concentrate according to the invention can be used in an amount similar to that used for conventional bouillon granules or powder. Accordingly, the density of the granules of the invention will not deviate much from the density of conventional bouillon granules or powder. It will be higher than 0.8 g/ml, preferably higher than 1 g/ml and lower than 2 mg/ml, preferably lower than 1.5 g/ml.

Preferably, the invention relates to a bouillon or seasoning concentrate according to the invention, wherein the at least two components are present in the respective amounts of
- 30-70% wt. salt
- 10-45% wt. monosodium glutamate
- 5-20% wt. sugar
- 2-15% wt. starch
- 7-15% wt. fat.

Preferably, the concentrate has been packaged in a consumer packaging.

The particles according to the invention are preferably used to season a dish. They can also be applied to prepare a bouillon, broth, soup, sauce or gravy. In a further aspect, the invention relates to the use of the bouillon or seasoning concentrate in the form of particles for the seasoning of a dish. The dish may be seasoned during the process of cooking, or after this process, e.g. during consumption of the meal.

In a further aspect, the invention relates to a bouillon or seasoning concentrate according to the invention, wherein the particles obtained by step (c) or (d) are mixed with 0.5-20% (by weight of the total resulting mixture) of herb and/or vegetable pieces. The added herb or vegetable pieces give a consumer appeal that may be more attractive than particles without the pieces, or wherein the pieces are incorporated in the particles. The presence of the herb and vegetable pieces may contribute to a better taste of the resulting bouillon, soup, sauce or gravy, and may give a better mouth feel.

In a further aspect, the invention relates to process to prepare a bouillon or seasoning concentrate in the form of a cube or tablet, the process comprising the steps according to the process of the invention, further comprising the step of:
e. forming cubes or tablets by one of the techniques of extrusion or pressing.

The optional step of dispensing the particles into a packaging may be absent in this case, when the cubes or tablets are directly formed from the particles resulting form the process of the invention. However, dispensing in e.g. a storage package may be desired, e.g. in case forming of the cubes or tablets takes place at a later moment and intermediate storage of the particles is desired.

The process according to the invention can result in a more efficient way to produce cubes of a bouillon or seasoning concentrate, as during the stages of storage of the bouillon or seasoning concentrate, and transfer to the pressing or extrusion device, the bouillon or seasoning concentrate shows a better flowability. Preferably, the pressing or extrusion is performed in a conventional device, used for the production of pressed or extruded cubes or tablets. When necessary, e.g. to acquire a substance that is sufficiently moist to press or extrude, an additional binding agent may be added to the granules, such as water, liquid polyol or fat.

The bouillon or seasoning concentrate of the present invention advantageously provides the possibility of a better sprinkling from its packaging. The material may be easier transported than conventional powder or granules in the packaging or upon storage. Preferably, the bouillon or seasoning concentrate may be added to a dish, in order to season the latter or give it a richer taste. However, the use as a bouillon, soup, sauce or gravy concentrate may also be possible.

To season a dish, the bouillon or seasoning concentrate is preferably sprinkled onto a dish directly from a dispenser or a packaging sachet. However, it also may be ground, e.g. in a grinder or a mill. The granules of the invention are preferably easily to be dissolved. They may be added to a liquid, e.g. water, to prepare a bouillon or a soup.

The granules according to the invention provide some additional advantages. As the granules are not powder-like, during storage, during the process of production, or during dispensing onto a steaming dish during or after cooking, the material will less easy stick to the packaging material, to the production device and/or stick together than powder. In addition, the regular shape of the granules may result in that the granules are easier dispended and dosed by e.g. a spoon. Moreover, due to this regular shape, the granules may have a reduced tendency to crush or scrape along each other, in this way reducing the production of powder-like material or dust. This contributes to a better flowing behaviour, and can contribute to a more appealing and 'rich'-looking product during use and on the shelf of the end-user.

The invention will be illustrated by the following example:

### Example:

The recipe given below was granulated using a basket extruder Bextruder BX 150 ex Bepex Leingarten Germany, into a standard granulated seasoning of 2mm in diameter and 4 mm length. It was ground by an impact mill. The dosability was assessed by measuring the powder flow as the so- called Dynamic flow rate (DFR). The speed of emptying a stand pipe of 2.5 cm diameter through an orifice is measured.

The milled system is sieved and the flow of the fractions is measured (twice). The higher the dynamic flow rate the better flowing are the ground granules, meaning better dosability. The sieve fractions have clearly higher flow rates than the reference sample. The finest fraction has the worst flow behaviour.

| **Component** | **%** |
|---|---|
| Mono sodium glutamate | 26.3 |
| NaCl | 52.7 |
| Sucrose | 8.6 |
| Corn starch native | 9.2 |
| Cold swelling starch | 0.7 |
| Citric acid | 0.5 |
| Garlic flavour | 2 |

| | **DFR (ml/sec)** | | |
|---|---|---|---|
| **Fraction** | **1** | **2** | **mean** |
| <250 µm | no flow | no flow | - |
| 250-355 | 99 | 104 | 102 |
| 355-500 | 129 | 133 | 131 |
| 500-710 | 145 | 144 | 145 |
| 710-850 | 134 | 137 | 136 |
| 850-1000 | 142 | 143 | 143 |
| >1000 | 125 | 129 | 127 |
| Reference | 80 | 87 | 83,5 |

The reference consisted of the ingredients listed in the table above, and is comparable to conventional bouillon powder.

## Claims

1. Process to produce a concentrate in the form of particles for preparing bouillon, soups, sauces, gravies or for use as a seasoning, comprising at least the following steps:
a. Preparing a mixture comprising at least two of the following components
- salt
- monosodiumglutamate
- sugar
- starch
- fat
b. preparing particles from said mixture, at least 80% wt. of the particles having a dimension of coarser than 2 mm as determined by sieve analysis,
c. grinding said particles to give particles with a particle dimension between 200 µm and 2 mm as determined by sieve analysis,
d. optionally removing particles below a dimension of from 200 µm as determined by sieve analysis,
wherein step (b) is effected by one of the processes comprising granulation, agglomeration, extrusion or a combination thereof.

2. Process according to claim 1, wherein the particles resulting from step (c) or (d) show an aspect ratio of between 1:1:1 and 1:2:2 (1:w:h), preferably, wherein the particles are (substantially) spheroidal.

3. Process according to claim 1 or 2, wherein the mixture comprises said at least two components in the respective amounts of
- 30-70% wt. salt
- 10-45% wt. monosodium glutamate
- 5-20% wt. sugar
- 2-15% wt. starch
- 7-15% wt. fat.

4. Process according to anyone of claims 1 to 3, wherein the process to prepare particles in step (b) comprises granulation.

5. Process according to any one of claim 1 to 4, wherein the extrusion, or granulation is followed by a step of breaking the material up to said particles.

6. Process according to anyone of claims 1 to 5, wherein step (d) is executed by sieving.

7. Process according to anyone of claims 1 to 6, further comprising the step of dispensing the particles resulting from step (c) or (d) into a packaging.

8. Concentrate in the form of particles for preparing bouillon, soups, sauces, gravies or for use as a seasoning, comprising at least two of the following components
- salt
- monosodium glutamate
- sugar
- starch
- fat,
at least 80% by weight of the particles having a particle dimension of between 200 µm and 2 mm, a density between 0.8 and 2 g/ml, and wherein the particles show an aspect ratio of between 1:1:1 and 1:2:2, preferably, wherein the particles are substantially spheroidal.

9. Concentrate in the form of particles for preparing bouillon, soups, sauces, gravies or for use as a seasoning, comprising the following components
- salt
- monosodium glutamate
- sugar
- starch
- fat
at least 80% by weight of the particles having a particle dimension of between 200 µm and 2 mm, a density between 0.8 and 2 g/ml, and wherein the particles show an aspect ratio of between 1:1:1 and 1:2:2, preferably, wherein the particles are substantially spheroidal, wherein the fat comprises oil.

10. Concentrate according to claim 8, wherein the at least two components are present in the respective amounts of
- 30-70% wt. salt
- 10-45% wt. monosodium glutamate
- 5-20% wt. sugar
- 2-15% wt. starch
- 7-15% wt. fat.

11. Concentrate according to, claim 8 to 10 mixed with 0.5-20% wt. herb and/or vegetable pieces (baaed on the weight of the resulting mixture).

12. Concentrate according to any one of claims 8 to 11, wherein the concentrate has been packaged in a consumer packaging.

13. Use of the concentrate according to anyone of the claims 8 to 12 for the seasoning of a dish.

14. Process to prepare a bouillon or seasoning concentrate in the form of a cube or tablet, comprising the steps according to anyone of the claims 1 to 6, further comprising the step of:
e. forming cubes or tablets by one of the techniques of extrusion or pressing.

## Patentansprüche

1. Verfahren zur Herstellung eines Konzentrats in der Form von Partikeln zur Herstellung von Bouillon, Suppen, Soßen, Bratensäften oder zur Verwendung als Würzmittel, umfassend wenigstens die folgenden Schritte:
a. Herstellen eines Gemisches, das wenigstens zwei der folgenden Komponenten umfasst:
- Salz,
- Mononatriumglutamat,
- Zucker,
- Stärke,
- Fett;
b. Herstellen von Partikeln aus dem Gemisch, wobei wenigstens 80 Gew.-% der Partikel eine Abmessung von gröber als 2 mm, wie sie durch Siebanalyse bestimmt wird, haben;
c. Zerkleinern der Partikel unter Erhalt von Partikeln mit einer Partikelabmessung von zwischen 200 µm und 2 mm, wie sie durch Siebanalyse bestimmt wird;
d. gegebenenfalls Entfernen von Partikeln mit einer Abmessung von unter 200 µm, wie sie durch Siebanalyse bestimmt wird;
wobei Schritt (b) durch eines der Verfahren, umfassend Granulierung, Agglomeration, Extrudieren oder eine Kombination davon, durchgeführt wird.

2. Verfahren gemäß Anspruch 1, wobei die Partikel, die aus Schritt (c) oder (d) resultieren, ein Formverhältnis von zwischen 1:1:1 und 1:2:2 (I:b:h) zeigen, wobei die Partikel vorzugsweise (im Wesentlichen) sphäroidal sind.

3. Verfahren gemäß Anspruch 1 oder 2, wobei das Gemisch die wenigstens zwei Komponenten in den jeweiligen Mengen von
- 30-70 Gew.-% Salz,
- 10-45 Gew.-% Mononatriumglutamat,
- 5-20 Gew.-% Zucker,
- 2-15 Gew.-% Stärke,
- 7-15 Gew.-% Fett
umfasst.

4. Verfahren gemäß einem der Ansprüche 1 bis 3, wobei das Verfahren zur Herstellung von Partikeln in Schritt (b) Granulierung umfasst.

5. Verfahren gemäß einem der Ansprüche 1 bis 4, wobei auf das Extrudieren oder die Granulierung ein Schritt des Zerkleinerns des Materials zu den Partikeln folgt.

6. Verfahren gemäß einem der Ansprüche 1 bis 5, wobei Schritt (d) durch Sieben durchgeführt wird.

7. Verfahren gemäß einem der Ansprüche 1 bis 6, das außerdem den Schritt des Abgebens der Partikel, die aus Schritt (c) oder (d) resultieren, in eine Verpackung umfasst.

8. Konzentrat in der Form von Partikeln zur Herstellung von Bouillon, Suppen, Soßen, Bratensäften oder zur Verwendung als Würzmittel, umfassend wenigstens zwei der vorgenannten Komponenten:
- Salz,
- Mononatriumglutamat,
- Zucker,
- Stärke,
- Fett,
wobei wenigstens 80 Gew.-% der Partikel eine Partikelabmessung von zwischen 200 µm und 2 mm, eine Dichte von zwischen 0,8 und 2 g/ml haben und wobei die Partikel ein Formverhältnis von zwischen 1:1:1 und 1:2:2 zeigen, wobei die Partikel im Wesentlichen sphäroidal sind.

9. Konzentrat in der Form von Partikeln zur Herstellung von Bouillon, Suppen, Soßen, Bratensäften oder zur Verwendung als Würzmittel, umfassend die folgenden Komponenten:
- Salz,
- Mononatriumglutamat,
- Zucker,
- Stärke,
- Fett,
wobei wenigstens 80 Gew.-% der Partikel eine Partikelabmessung von zwischen 200 µm und 2 mm, eine Dichte von zwischen 0,8 und 2 g/ml haben und wobei die Partikel ein Formverhältnis von zwischen 1:1:1 und 1:2:2 haben, wobei die Partikel vorzugsweise sphäroidal sind, wobei das Fett Öl umfasst.

10. Konzentrat gemäß Anspruch 8, wobei die wenigstens zwei Komponenten in den jeweiligen Mengen von
- 30-70 Gew.-% Salz,
- 10-45 Gew.-% Mononatriumglutamat,
- 5-20 Gew.-% Zucker,
- 2-15 Gew.-% Stärke,
- 7-15 Gew.-% Fett
vorliegen.

11. Konzentrat gemäß Anspruch 8 bis 10, das mit 0,5 bis 20 Gew.-% Kräuter- und/oder Gemüsestücken (bezogen auf das Gewicht des resultierenden Gemisches) vermischt ist.

12. Konzentrat gemäß einem der Ansprüche 8 bis 11, wobei das Konzentrat in einer Konsumentenverpackung abgepackt wurde.

13. Verwendung des Konzentrats gemäß einem der Ansprüche 8 bis 12 zum Würzen einer Mahlzeit.

14. Verfahren zur Herstellung eines Bouillon- oder Würzmittelkonzentrats in der From eines Würfels oder einer Tablette, umfassend die Schritte gemäß einem der Ansprüche 1 bis 6, außerdem umfassend den Schritt:
e. Formen von Würfeln oder Tabletten durch eine der Techniken Extrudieren oder Pressen.

## Revendications

1. Procédé pour produire un concentré sous la forme de particules, pour la préparation de bouillon, soupes, sauces, jus ou pour une utilisation comme assaisonnement, comprenant au moins les étapes suivantes :
a. préparation d'un mélange comprenant au moins deux des composants suivants :
✔ sel
✔ glutamate monosodique
✔ sucre
✔ amidon
✔ matière grasse
b. préparation de particules à partir dudit mélange, au moins 80 % en poids des particules ayant une dimension plus grosse que 2 mm, déterminée par analyse au tamis,
c. broyage desdites particules pour donner des particules ayant une dimension de particule comprise entre 200 µm et 2 mm, déterminée par analyse au tamis,
d. retrait facultatif des particules dont la dimension est inférieure à 200 µm, déterminée par analyse au tamis,
où l'étape (b) est effectuée par un des procédés comprenant la granulation, l'agglomération, l'extrusion ou une de leurs combinaisons.

2. Procédé selon la revendication 1, dans lequel les particules résultant de l'étape (c) ou (d) présentent un rapport d'aspect compris entre 1 : 1 : 1 et 1 : 2 : 2 (L : 1 : h), de préférence, les particules étant (sensiblement) sphéroïdales.

3. Procédé selon la revendication 1 ou 2, dans lequel le mélange comprend lesdits au moins deux composants dans les quantités respectives de
✔ 30 à 70 % en poids de sel
✔ 10 à 45 % en poids de glutamate monosodique
✔ 5 à 20 % en poids de sucre
✔ 2 à 15 % en poids d'amidon
✔ 7 à 15 % en poids de matière grasse.

4. Procédé selon l'une quelconque des revendications 1 à 3, dans lequel le procédé pour préparer des particules à l'étape (b) comprend une granulation.

5. Procédé selon l'une quelconque des revendications 1 à 4, dans lequel l'extrusion ou la granulation est suivie d'une étape de décomposition de la matière jusqu'auxdites particules.

6. Procédé selon l'une quelconque des revendications 1 à 5, dans lequel l'étape (d) est exécutée par tamisage.

7. Procédé selon l'une quelconque des revendications 1 à 6, comprenant en outre l'étape consistant à distribuer les particules résultant de l'étape (c) ou (d) dans un emballage.

8. Concentré sous la forme de particules pour la préparation de bouillon, soupes, sauces, jus ou pour une utilisation en tant qu'assaisonnement, comprenant au moins deux des composants suivants :
✔ sel
✔ glutamate monosodique
✔ sucre
✔ amidon
✔ matière grasse,
au moins 80 % en poids des particules ayant une dimension de particule comprise entre 200 µm et 2 mm, une densité comprise entre 0,8 et 2 g/mL, et où les particules présentent un rapport d'aspect compris entre 1 : 1 : 1 et 1 : 2 : 2, de préférence, où les particules sont sensiblement sphéroïdales.

9. Concentré sous la forme de particules pour la préparation de bouillon, soupes, sauces, jus ou pour une utilisation en tant qu'assaisonnement, comprenant les composants suivants :
✔ sel
✔ glutamate monosodique
✔ sucre
✔ amidon
✔ matière grasse,
au moins 80 % en poids des particules ayant une dimension de particule comprise entre 200 µm et 2 mm, une densité comprise entre 0,8 et 2 g/mL, et
où les particules présentent un rapport d'aspect compris entre 1 : 1 : 1 et 1 : 2 : 2, de préférence, où les particules sont sensiblement sphéroïdales, où la matière grasse comprend de l'huile.

10. Concentré selon la revendication 8, dans lequel les au moins deux composants sont présents dans les quantités respectives de
✔ 30 à 70 % en poids de sel
✔ 10 à 45 % en poids de glutamate monosodique
✔ 5 à 20 % en poids de sucre
✔ 2 à 15 % en poids d'amidon
✔ 7 à 15 % en poids de matière grasse.

11. Concentré selon les revendications 8 à 10, mélangé avec 0,5 à 20 % en poids d'herbes et/ou de morceaux de légumes (par rapport au poids du mélange résultant).

12. Concentré selon l'une quelconque des revendications 8 à 11, dans lequel le concentré a été emballé dans un emballage pour consommateur.

13. Utilisation du concentré selon l'une quelconque des revendications 8 à 12 pour l'assaisonnement d'un plat.

14. Procédé de préparation d'un concentré de bouillon ou d'un concentré d'assaisonnement sous la forme d'un cube ou d'une tablette, comprenant les étapes selon l'une quelconque des revendications 1 à 6, comprenant en outre l'étape consistant à :
e. former des cubes ou des tablettes par l'une des techniques d'extrusion ou de pressage.
